# EUROPEAN PATENT APPLICATION

(11) **EP 0 554 762 A1**
(43) Date of publication of application: **11.08.1993**
(21) Application number: 93101150.6
(22) Date of filing: 26.01.1993
(51) Int. Cl.: A21C 1/00, A21C 11/02

(54) **Method of cutting dough to obtain different forms of pellets**

(30) Priority: 03.02.1992 IT TV920016
(71) Applicant: FEN NEW FOOD ENGINEERING S.P.A., I-31015 Conegliano (TV) (IT)
(72) Inventor: Righetto, Giordano, I-30035 Mirano (VE) (IT)
(74) Representative: D'Agostini, Giovanni, Dr.

(57) **Abstract**

Method for impression on edible dough layers, particularly suitable for preparing variously shaped pellets for the production of snacks and similar products on continuous lines which include, before the production line, the preparation of an initially flat uniform layer of partially worked product by the extrusion and cutting of wet mixes of cereals and/or other starchy ingredients of various types, a further intermediate station for a pellet formation cycle, and at least a third station for the drying and/or pellet expansion stage; characterised by the fact that the partially worked product must arrive at the intermediate stage for the pellet formation cycle from at least one feeder line with the following working synchronously along its length :
- calibration rollers,
- and at least one set of axially adjustable shaping rollers paired with non symmetrical dies;
these rollers deposit the preformed layer of dough in the same plane on an advancing line towards the next station.

## Description

The following invention concerns a method for cutting pastry dough, to obtain different forms of pellets, in continuous lines, for the production of snacks, and the products obtained with this method.

The innovation has a particular, but not exclusive, application in the field of industrial machines for the food industry.

The current technique used in the sector is the continuous production line for producing snacks. In common terminology, a snack is a food product, to be eaten mainly between meals. They can be of the type produced from pellets of cereals or potatoes which have been expanded by frying, or of the type produced from puffed products expanded directly, salt biscuits, etc. In the first case, in an automated production line, a partially worked product is obtained by the extrusion and cutting of wet mixes of cereals and/or other starchy ingredients of various types. Traditionally the initial shape of such mixtures is basically flat and uniform, in other words an edible piece of pastry dough, which later is put through a pre-drying process until optimal temperatures and humidity values are reached. The piece of pastry dough thus obtained is then further shaped in a mould, according to the various shapes required, thus creating a product which can be stored, such as the pellet, the pellet snack or even the half product, which can then be sent to a drying and/or expansion station. After the latter stage, the snack is then ready for consumption.

As for the production of shapes with more or less regular geometric outlines, there are various methods which are more or less well known. The most common of these is that used to produce small biscuits or ship's biscuits. In particular there is a device which, using an appropriate cutting roll, cuts out biscuit shapes from a thick piece of pastry dough, which has been prepared using the appropriate equipment. The transfer of this system into the snack production sector due to market demand, has also enabled flat pellets to be cut out, from which crisps are made from a mixture of pulverised ingredients, by means of expansion at high temperatures. Even in this case one starts with a piece of pastry dough of uniform thickness, and by cutting it with a cutting roll, flat pellets which can be round, oval, triangular quadrilateral etc., are produced. The problems associated with the aforementioned system arise essentially from the fact that the range of shapes obtainable is rather limited since the cutting equipment would need to use various types of moulds in order to obtain new shapes. Consequently rather high costs would be involved, both for production and for the store management of the cutting rolls. The problem is not insignificant, above all on account of the fact that the manufacturer is constantly on the look out for new shapes and sizes in order to stimulate the customer to buy his products rather than those of a competitor. Another problem with the aforementioned system is the fact that the shapes are rather imprecise, particularly in relation to the definition of the reproduction on the piece of pastry dough of the figure represented by the mould.

Another well-known method is the cutting of flat pellets into shapes cut out from an external surround. The pastry dough passes under two alternating punches arranged in series; the first presses into the dough the internal shape while the second makes the external surround. Both cut through the product and, as there is no uniform base beneath, the waste falls into the area immediately below the punch press. It is thus possible to obtain a better quality product in comparison to the previous technique, but it is being used less frequently as there are high costs associated with the construction of the punches and the die and product time is no shorter than the above mentioned technique.

One solution to the problems presented above would be the improvement of the method to make variously-shaped pellets, particularly on continuous lines for the production of snacks, as in industrial invention patent application n⁻ TV91A000133. In detail, this method includes, at the beginning of the production line, the preparation of a partially worked product by the extrusion and cutting of wet mixes of cereals and/or other starchy ingredients of various types. The initial shape of this dough is basically flat and uniform, and it passes on to another intermediate stage for a pellet formation cycle before reaching a drying and/or expansion stage. The shaping cycle then continues with the dough passing along an advancing line under two phases of successive stamping with synchronised equipment, from which the waste is either recovered and recycled to the beginning of the press again or passed directly to the next one.

The aim of the present invention is to construct a further improvement to the cited patent.

It is well known that there is a single pair of opposing rollers at the beginning of a continuous production line for snacks, and these calibrate the thickness of the single layer of dough to send on to the next station for pellet formation. In detail, starting from a single layer of dough, it is possible to obtain variously shaped pellets, but, in general, once dried and/or expanded they will always remain essentially flat, even if they are irregularly structured. In some cases, other rollers can be mounted by the side or ahead of the first pair of shaping rollers, so that the dough is given an essentially grained conformation, but it always remains uniformly thick and this confers to the snack, particularly in the form of crisps, and wavy shape. In this case both the roller and counterroller have the same die cut out of their surfaces, and in this case the dies fit symmetrically one inside the other. The dies of these rollers have adjacent and coplanar teeth and the top (of the teeth) is at right angles so that the dough is imprinted with a grain which maintains a constant thickness along the section so imprinted.

There is another technique for obtaining a grain in a single layer of dough, and in detail this requires the use if a traditional drawplate.
However, in this case too, the dough obtained has a fixed thickness for each drawplate used. Thus amongst the problems it is possible to identify the fact that the thickness of the dough does not vary along its length. Furthermore, maintaining the grained effect is very complex particularly with partially gelatinised mixtures.

An improvement to Italian patent application No. TV91A000133 was proposed with Italian patent application No.TV92A000012, which described a method to obtain variously shaped pellets, in which the partially worked mixture arrives in front of an intermediate station for the formation of multilayer pellets from two separate feeder lines which use at least one pair of rollers with synchronized movement for calibration and/or shaping. The lower pair of rollers supplies the first dough layer coplanar to the line of advancement of the dough towards the next station, while the second dough layer comes from overhead rollers and is deposited in parallel on the first. Instead, in the case now under consideration, starting from two layers of dough obtained from the pairing of two layers coming from two separate feeder lines, it can be appreciated that the pellet surface will be practically smooth on all its surfaces, thus limiting the possibilities for alternative configurations.

This and other aims are satisfied with the present invention as described in the annexed claims, resolving the problems discussed with a method for the impression on edible dough layers. It is particularly suitable for preparing variously shaped pellets for the production of snacks and similar products on continuous lines which include, before the production line, the preparation of an initially flat uniform layer of partially worked product by the extrusion and cutting of wet mixes of cereals and/or other starchy ingredients of various types, a further intermediate station for a pellet formation cycle, and finally at least one drying and/or pellet expansion stage. The partially worked product must arrive at the intermediate stage for the pellet formation cycle from at least one feeder line with the following working synchronously along its length:
- calibration rollers,
- at least one set of paired shaping rollers with non symmetrical dies;
these rollers deposit the preformed layer of dough in the same plane on an advancing line towards the next station.

In this way there is an immediate technical advance which confers various advantages, among which the most important is the fact that it is possible to obtain pellets with other configurations. particularly snacks such as crisps with marked graining, or lined "pads" with an almost unlimited number of possible shapes, from the very complex to the very simple, without changing the normal production process, particularly in terms of execution times, and also obtaining a product with superior qualitative characteristics and with a competitive price. One of the principal characteristics of the "pad" type snack is that it is hollow, low in fat, aromatic, perfectly digestible and aesthetically pleasing.

These and other advantages appear from the following detailed description of the preferred methods of construction, together with drawings which are only examples and not intended to be limiting.

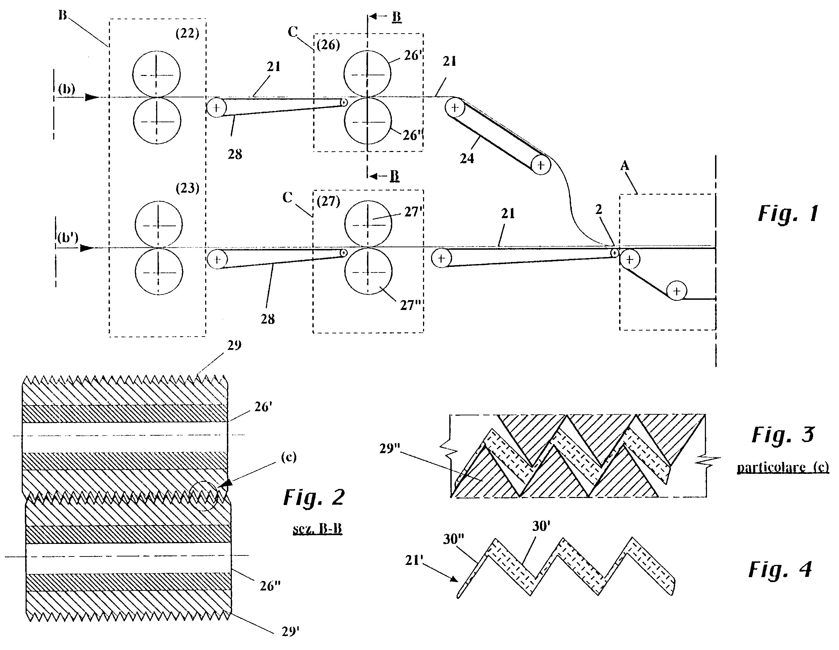

Figure 1 shows a side view of a machine for producing a layer of pastry in a continuous line for the production of snacks, installed in front of a pellet shaping station.

Figure 2 shows a longitudinal section of a pair of dough shaping rollers, in this case paired off-line, taken along axis B-B in Figure 1.

Figure 3 represents an enlarged view of detail (c) in section as in Figure 2, showing the off-line pairing of the two shaping rollers.

Figure 4 represents an enlarged overhead view of a section of a portion of dough shaped by the imprint of a pair of shaping rollers as in the preceding figures.

Figure 5 shows a perspective view of a flat surfaced dough multilayer.

Figure 6 shows a perspective view of a dough multilayer, in which the upper layer has been previously shaped.

Figure 7 shows a perspective view of a pellet with a different configuration obtained by stamping the multilayer dough in Figure 6.

Figure 8 shows a perspective view of a possible snack obtained by cooking the pellet shown in the previous Figure.

Figure 9 shows a perspective and section view of the snack in Figure 8, taken along axis A-A.

Figure 10 represents in perspective, a layer of dough formed with differing thicknesses.

In Figure 11 a round pellet is illustrated, having been obtained by stamping the dough in Figure 10.

In Figure 12 a crisp type snack is shown, obtained from cooking the pellet in the previous Figure.

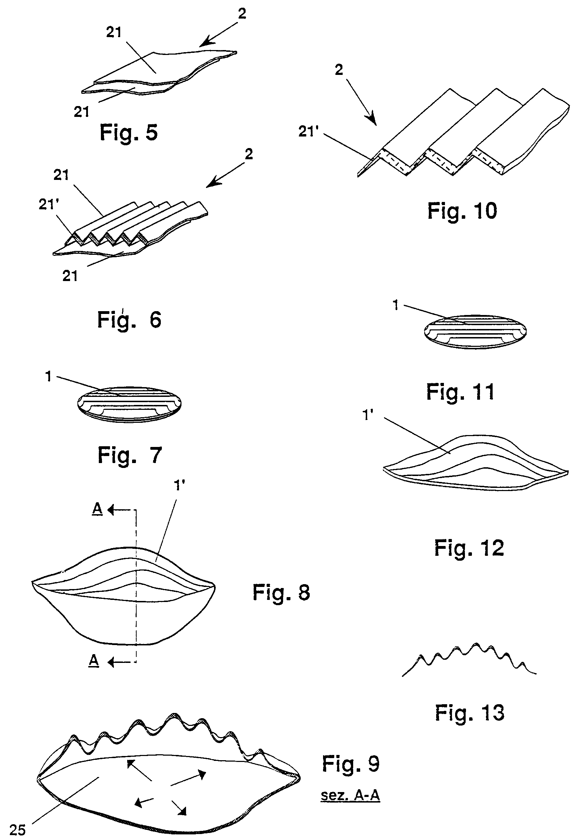

Finally, Figure 13 represents a frontal view of the snack shown in Figure 12.

With reference to the figures, it can be seen that pellets, snack pellets or even half products, variously shaped (1), particularly for making even complicated shaped snacks (1') are obtained with a machine (A) which, in this case, is mounted in a continuous production line. Before this machine there are the stages for the preparation of a partially worked mixture such as edible pastry dough (2) and after the said machine (A) there is at least one drying and/or expansion station for the pellets (1) thus formed. The procedure described uses preformed dough (2) obtained from a mixture of starch based ingredients, such as cereals and/or potatoes and/or vegetables to which spices, plant based aroma enhancers, flavour enhancers, colourants, conservants, nutritional balancers and technological adjutants may have been added. The dough (2), partially worked before the machine (A) can be a single or multilayer, and has a starch gelatinisation degree varying between 0 and 100%, a moisture content of between 16 and 50%, a variable thickness between 0.2 and 3mm and a width of up to 2m. In this case, a method for impressing the dough (21) requires a section for preshaping (C) after a calibration section (B) along at least one feeder line (b, b').

In detail, the preshaping of the dough (2) with the present method can be performed with a machine fitted with a single feeder line (b') or at least a secondary such line (b) overlying the first; obtaining, depending upon the specific arrangement, a single layer (21') of dough (2) arranged longitudinally, or a double dough layer (2), on which the conformation is only obtained on one side of one layer (21') of it, or, still on a double dough layer (2), on which the conformation (21') is obtained on both layers (21).

If a partially worked multilayer of dough (2) is to be worked upon, it consists of a least one layer of dough (21) coming from two separate feeder lines (b, b'), one being mounted above the other. Each dough layer (21), along the said feeder lines (b, b') is first reduced to the thickness desired and brought to the working level by a pair of rollers (22, 23) which can be seen in section (B). In this instance, each pair of rollers (22, 23) is composed of a roller and a corresponding counter roller; in this case both are smooth and the dough (21), passing between them, is suitably calibrated. Each distinct feed line (b, b') can have a preshaping section (C) after the initial calibration section (B), generally including at least a pair of shaping rollers (26, 27) mounted after the calibrating rollers (22, 23) on the same line. The connection between two working sections (B-C) can be assured by the intervention of a transfer belt (28) which transfers the dough already calibrated (21) towards the said pair of axially adjustable shaping rollers (26, 27). In detail, each pair of rollers (26, 27) is composed of a roller (26', 27') and a corresponding counterroller (26'', 27''), on whose surfaces are mounted the pressing dies (29, 29') for pressing the pattern (21') onto the layer of dough (21). In practice, each die (29, 29') has a section essentially formed from a continuous row of teeth (29''), all symmetrical and in the same plane. Offline pairing of the roller (26', 27') with the corresponding counterroller (26'', 27'') gives a non symmetrical pressing area, in practice an alternating tapering in the thickness running between the walls of the counterposed rollers. The result is determined by the particular conformation (21') of the layer of dough (21) in which there will be more substance on one side (30') of the pressed profile than on the other (30'') which will obviously be thinner. In particular, while the differing thickness conformations are obtained in correspondence with the first walls (30') of the calibrating rollers present in section (B), the thickening of the walls (30'') is obtained from the shaping rollers present in the following section (C). This conformation can also be achieved without the said rollers (26, 27) being off line, obtaining on the respective surfaces of the same dies but formed in such a way that the pairings are non symmetrical between themselves. In the example proposed in the enclosed drawings, in a feeder line (b) at the exit from the rollers (26), of the layer of dough (21) so shaped, a belt (24) deposits the said layer (21) in parallel and on top of a first layer (21) coming from an underlying line (b') which is suitably deposited in the same plane as a line advancing towards the following station (A) for shaping the pellets (1). In this instance, the section (C) of shaping the layer (21) from the underlying feeder line (b') could also not be working, depending on the type of pellet (1) desired, and in this case only the upper part would be shaped. Finally, the pellet (1), subjected to cooking, will assume the conformation of a typical pad (1') which is hollow (25), which will have a markedly wavy upper part and will offer a better colour effect, as it has longitudinal trenches obtained from the effect of the reduced expansion due to the lesser thickness (30'') determined by the conformation (21') of the pellet (1) and/or the dough (2).

Clearly, when one desires to obtain a pellet (1) similar to that obtained from stamping a shape from a single layer (21') of dough(2), it will be sufficient to use or exclude one of the said feeder lines (b, b').

## Claims

1. Method for impression on edible dough layers, particularly suitable for preparing variously shaped pellets for the production of snacks and similar products on continuous lines which include, before the production line, the preparation of an initially flat uniform layer of partially worked product by the extrusion and cutting of wet mixes of cereals and/or other starchy ingredients of various types, a further intermediate station for a pellet formation cycle, and at least a third station for the drying and/or pellet expansion stage; characterised by the fact that the partially worked product must arrive at the intermediate stage for the pellet formation cycle from at least one feeder line with the following working synchronously along its length :
- calibration rollers,
- and at least one set of axially adjustable shaping rollers paired with non symmetrical dies;
these rollers deposit the preformed layer of dough in the same plane on an advancing line towards the next station.

2. Method and relative equipment according to claim 1., characterised by the fact that the partially worked product must arrive at the intermediate stage for the pellet formation cycle from two distinct feeder lines, with at least one of them having the following working synchronously along its length :
- calibration rollers,
- and at least one set of paired shaping rollers with non symmetrical dies;
and in which while the first rollers deposit the first layer of dough in the same plane on an advancing line towards the next station, the second layer of dough arriving from the rollers overlying the first ones is deposited on and parallel to the said first layer.

3. Pellet and snack obtained according to claims 1. and 2., characterised by the fact that they are obtained from a layer of dough (2) whose profile conformation (21') has different thicknesses (30', 30'').

4. Pellet and snack obtained according to claims 1. and 2., characterised by the fact that they are formed from the pairing of two layers of dough (21) of which at least one shaped (21'), thus obtaining different thicknesses (30', 30'').

5. Method and relative equipment according to claims 1. and 2., characterised by the fact that the shaping rollers (26, 27) are composed of a roller (26', 27') and a corresponding counterroller (26'', 27'') on whose respective surfaces are mounted the symmetrical pressing dies (29, 29'); said rollers are paired off-line.

6. Method and relative equipment according to claims 1., 2. and 3., characterised by the fact that at least one feed line (b, b') has a calibration section (B) and a corresponding preshaping section (C), generally including at least one pair of shaping rollers (26, 27) mounted after the calibrating rollers (22, 23) on the same line (b, b').

7. Equipment according to the previous claims, characterised by the fact that the dies (29, 29') for pressing on the layer of dough (21) with a given conformation (21') have a cross section essentially formed from a continuous row of teeth (29''), all symmetrical and in the same plane.

8. Method according to the previous claims, characterised by the fact that a successive shaping (A) cycle after cycles of calibration (B) and preshaping (C), consists of subjecting the dough (2), along the line of advancement, to at least one of two phases of stamping in logical succession with distinct and successive synchronous means, and including the relative unit for recovering the waste produced, which is either reloaded before the aforementioned station or sent on directly to the next one.

9. Pellet and relative snacks obtained according to claims 2. and 4., characterised by the fact that the stamping cycle only deals with the external perimeter of the pellet (1), and/or the definition of the single internal figures thus cut out, thus allowing the pastry in the two overlying layers of dough (21) to amalgamate perfectly only along their respective edges, while the internal area remains unjoined, which, after cooking, yields a hollow (25) snack (1').
